# EUROPÄISCHE PATENTSCHRIFT

(11) **EP 4 431 667 B1**
(45) Veröffentlichungstag und Bekanntmachung des Hinweises auf die Patenterteilung: **23.09.2026**
(21) Anmeldenummer: 24161667.1
(22) Anmeldetag: 06.03.2024
(51) Int. Cl.: E03C 1/04

(54) **ARMATUR**
ARMATURE
ARMATURE

(30) Priorität: 15.03.2023 DE 102023202353
(43) Veröffentlichungstag der Anmeldung: 18.09.2024
(73) Patentinhaber: BLANCO GmbH + Co KG, 75038 Oberderdingen (DE)
(72) Erfinder: Kuch, Oliver, 75038 Oberderdingen (DE); Kaya, Özkan, 76703 Kraichtal (DE); Moritz, Marcel, 75038 Oberderdingen (DE)
(74) Vertreter: Ullrich & Naumann PartG mbB

(56) Entgegenhaltungen:
- CN-U- 206 175 761
- US-A1- 2016 215 482
- US-A1- 2017 362 803
- US-A1- 2019 003 162
- US-B2- 10 669 701

## Beschreibung

Die Erfindung betrifft eine Armatur, insbesondere eine Sanitärarmatur, umfassend einen Grundkörper, ein erstes Bauteil in Form eines an dem Grundkörper angeordneten Arms, ein zweites Bauteil in Form eines an dem Grundkörper angeordneten flexiblen Auslasses, wobei das zweite Bauteil lösbar an dem ersten Bauteil festlegbar ist.

Obwohl auf beliebige Armaturen anwendbar, wird die vorliegende Erfindung in Bezug auf Sanitärarmaturen erläutert.

Armaturen gemäß dem Stand der Technik sind beispielsweise in US2019/003162A1, US2016/215482A1, US2017/362803A1, US10669701B2 und CN206175761U offenbart. Sanitärarmatur ist beispielsweise aus der EP 3 276 090 B1 bekannt geworden.

Die Sanitärarmatur umfasst einen Sockel, eine Schlauchbrause und einen an dem Sockel gehaltenen Arm, wobei der Arm eine Schlauchbrausen-Aufnahme, an welcher die Schlauchbrause in einer Ruheposition lösbar gehalten ist, umfasst. Die Schlauchbrause umfasst hierzu einen Halteabschnitt, der zumindest abschnittsweise komplementär zu einer Schlauchbrausen-Aufnahme des Arms ausgebildet ist und vorzugsweise so ausgebildet ist, dass er in der Ruheposition der Schlauchbrause lösbar an der Schlauchbrausen-Aufnahme festlegbar ist. Die lösbare Festlegung des Halteabschnitts der Schlauchbrause an der Schlauchbrausen-Aufnahme des Arms kann dabei beispielsweise durch Formschluss und/oder durch Kraftschluss erfolgen. Insbesondere kann vorgesehen sein, dass der Halteabschnitt durch Magnetkraft an der Schlauchbrausen-Aufnahme festlegbar ist.

Nachteilig dabei ist, dass die Schlauchbrause lediglich hinsichtlich ihrer vertikalen Richtung festlegbar ist. Die zylindrische Brause kann sich jedoch durch die Eigenspannung der Feder und/oder des Brauseschlauches verdrehen, da sie in der runden Schlauchbrausen-Aufnahme nur magnetisch gehalten, aber nicht in einer definierten Position fixiert wird. Die Brause und der Bedientaster für die Brauseumstellung kann sich somit willkürlich verdreht in einer für den Nutzer unergonomischen Position befinden oder bewegen. Zudem wird eine hohe Wertigkeit durch den nachteiligen optischen Eindruck vermindert.

Eine Aufgabe der vorliegenden Erfindung ist es daher, eine zuverlässige und gleichzeitig definierte Anordnung mit ansprechendem optischen Eindruck und geringen Kosten bereitzustellen.

Eine weitere Aufgabe der vorliegenden Erfindung ist es, eine alternative Armatur, insbesondere eine Sanitärarmatur, bereitzustellen.

**In** einer Ausführungsform löst die vorliegende Erfindung die vorstehend genannten Aufgaben bei einer Armatur, insbesondere Sanitärarmatur, umfassend einen Grundkörper, ein erstes Bauteil in Form eines an dem Grundkörper angeordneten Arms, ein zweites Bauteil in Form eines an dem Grundkörper angeordneten flexiblen Auslasses, wobei das zweite Bauteil lösbar an dem ersten Bauteil festlegbar ist,
dadurch, dass mittels eines Vorsprungs an einem der beiden Bauteile, der in zumindest eine Vertiefung in dem anderen der beiden Bauteile eingreift, die beiden Bauteile aneinander mittels einer lösbaren Verbindung verdreh- und verschiebesicher festlegbar sind.

Der Begriff "Sanitär" ist im weitesten Sinne zu verstehen und bezieht sich, insbesondere in der Beschreibung, vorzugsweise in den Ansprüchen unter anderem auf jegliche Objekte, Anordnungen, Vorrichtungen, Einrichtungen und dergleichen im Zusammenhang mit Bädern, Küchen, Heizungen und dergleichen.

Der Begriff "verschiebesicher" ist im weitesten Sinne zu verstehen und bezieht sich, insbesondere in der Beschreibung, vorzugsweise in den Ansprüchen auf eine Verschieblichkeit entlang zumindest einer, insbesondere zwei Richtungen, die verhindert, gehemmt und/oder unterdrückt wird.

Der Begriff "Vertiefung" ist im weitesten Sinne zu verstehen und bezieht sich, insbesondere in der Beschreibung, vorzugsweise in den Ansprüchen auf eine Öffnung, Aussparung oder dergleichen, die einen umlaufenden Rand, Begrenzung oder dergleichen aufweist. Unter dem Begriff "Vertiefung" sind insbesondere in der Beschreibung, vorzugsweise in den Ansprüchen keine Aussparungen zu verstehen, die im Querschnitt in einer Richtung offen sind, beispielsweise U-förmig ausgebildet sind, und somit keinen umlaufenden Rand oder eine vollständig umlaufende Begrenzung aufweisen.

Einer der damit erzielten Vorteile ist, dass eine hohe optische Anmutung, eine zuverlässige und definierte Festlegung sowie eine einfache definierte Betätigung der Armatur, insbesondere des flexiblen Auslaufs, ermöglicht werden.

Weitere Merkmale, Vorteile und weitere Ausführungsformen sind im Folgenden beschrieben oder werden dadurch offenbar.

Gemäß einer vorteilhaften Weiterbildung der Erfindung ist die lösbare Verbindung mittels einer kraftschlüssigen Verbindung, insbesondere mittels Magnetkraft, bereitstellbar. Vorteil hiervon ist eine einfache Lösbarkeit bei gleichzeitig zuverlässiger Festlegung. Die Stärke der kraftschlüssigen Verbindung kann dabei so ausgebildet sein, sodass schon in einer vordefinierten Entfernung eine Krafteinwirkung auf das zweite Bauteil für einen Nutzer spürbar ist und ein "sich finden" von zweitem und erstem Bauteil für den Nutzer bereitgestellt wird, was die Nutzerzufriedenheit und die Bedienbarkeit weiter verbessert.

Gemäß einer weiteren vorteilhaften Weiterbildung der Erfindung ist eines der Bauteile magnetisch ausgebildet, insbesondere das zweite Bauteil, und das andere Bauteil, insbesondere das erste Bauteil, weist zumindest einen Magneten auf. Damit wird auf einfache und zuverlässige Weise eine kraftschlüssige Verbindung bereitgestellt. Gleichzeitig kann die Magnetkraft auf einfache Weise vorgegeben werden beziehungsweise an die jeweiligen Bedingungen angepasst werden. Vorzugsweise kann das eine Bauteil, insbesondere das zweite Bauteil, aus einem magnetischen Material, beispielsweise einem Metall oder dergleichen, hergestellt sein. Insbesondere kann als Magnet ein Neodymmagnet verwendet werden.

Gemäß einer weiteren vorteilhaften Weiterbildung der Erfindung ist der Vorsprung als Magnet ausgebildet. Vorteil hiervon ist, dass eine einfache Ausbildung des Vorsprungs zur Bereitstellung von Magnetkraft ermöglicht wird.

Gemäß einer weiteren vorteilhaften Weiterbildung der Erfindung ist der Vorsprung und/oder die Vertiefung mit einer Schutzkappe, insbesondere aus Kunststoff, versehen. Dies ermöglicht zum einen eine Reduzierung von Beschädigungen bei der Festlegung, zum anderen sind größere Toleranzen bei der Ausbildung der Vertiefung möglich.

Gemäß einer weiteren vorteilhaften Weiterbildung der Erfindung weist der Querschnitt von Vorsprung und/oder Vertiefung zumindest eine Ecke auf, insbesondere zumindest drei Ecken, insbesondere vier Ecken, und ist insbesondere quadratisch oder rechteckförmig ausgebildet. Vorteil hiervon ist, dass eine Verdrehsicherheit und/oder Verschiebesicherheit auf einfache Weise bereitstellbar ist.

Gemäß einer weiteren vorteilhaften Weiterbildung der Erfindung sind die beiden Bauteile zumindest teilweise durch einen umlaufenden Abstand aneinander festlegbar. Dies verhindert beispielsweise einen direkten Kontakt der beiden Bauteile, insbesondere deren Oberflächen, was Beschädigungen der Oberflächen verhindert. Die beiden Bauteile sind dann lediglich über den Vorsprung, der in die entsprechende Aussparung eingreift, miteinander verbunden.

Gemäß einer weiteren vorteilhaften Weiterbildung der Erfindung weist in Einführrichtung der Vorsprung eine größere Tiefe auf als die Vertiefung zur Bildung des Abstands. Dies ermöglicht auf besonders einfache Weise die Ausbildung eines Abstands zwischen den beiden Bauteilen, ausgenommen den in die Vertiefung eingreifenden Vorsprung.

Gemäß einer weiteren vorteilhaften Weiterbildung der Erfindung weist der Abstand eine Größe von 0,5 mm oder mehr, vorzugsweise 1 mm oder mehr, insbesondere 2 mm oder mehr, und 10 mm oder weniger, vorzugsweise 5 mm oder weniger, insbesondere 3 mm oder weniger, auf. Einer der damit erzielten Vorteile ist, dass neben einer hohen optischen Wertigkeit ein Verkratzen der beiden Bauteile vermieden wird. Darüber hinaus wird eine einfache Betätigung der beiden Bauteile ermöglicht.

Gemäß einer weiteren vorteilhaften Weiterbildung der Erfindung sind mehrere Vertiefungen angeordnet. Vorteil hiervon ist eine erhöhte Flexibilität für einen Nutzer bei der Festlegungsposition der beiden Bauteile aneinander.

Gemäß einer weiteren vorteilhaften Weiterbildung der Erfindung sind die Vertiefungen in vertikaler Richtung voneinander beabstandet angeordnet, insbesondere auf einer gemeinsamen Achse liegend. Dies ermöglicht auf einfache Weise eine zuverlässige Höhenverstellung bei gleichzeitiger Festlegung der beiden Bauteile aneinander.

Gemäß einer weiteren vorteilhaften Weiterbildung der Erfindung ist die zumindest eine Vertiefung entlang einer Richtung größer als der Vorsprung ausgebildet, derart, dass der Vorsprung innerhalb der Vertiefung frei anordenbar ist. Vorteil hiervon ist, dass eine begrenzte Verschieblichkeit der beiden Bauteile zueinander zugelassen wird. Ein Nutzer muss daher die lösbare Verbindung nicht lösen, wenn er beispielsweise die Höhe der Festlegung des zweiten Bauteils am ersten Bauteil ändern möchte.

Gemäß einer weiteren vorteilhaften Weiterbildung der Erfindung ist der flexible Auslass in Form einer Schlauchbrause ausgebildet. Dies ermöglicht eine flexible Handhabung des zweiten Bauteils durch einen Nutzer.

Gemäß einer weiteren vorteilhaften Weiterbildung der Erfindung weist das zweite Bauteil eine Betätigungseinrichtung zur Betätigung der Sanitärarmatur auf, die insbesondere auf der dem ersten Bauteil abgewandten Seite des zweiten Bauteils angeordnet ist. Damit wird eine einfache und direkte Betätigung der Sanitärarmatur durch einen Nutzer ermöglicht bei insbesondere einfacher Zugänglichkeit der Betätigungseinrichtung.

Weitere wichtige Merkmale und Vorteile der Erfindung ergeben sich aus den Unteransprüchen, aus den Zeichnungen und aus der dazugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der vorliegenden Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigt in schematischer Form
- Figur 1: eine Armatur gemäß einer Ausführungsform der vorliegenden Erfindung;
- Figur 2: die Armatur gemäß Figur 1 mit erstem und zweitem Bauteil gelöst voneinander gemäß einer Ausführungsform der vorliegenden Erfindung in dreidimensionaler Darstellung; und
- Figur 3: die Armatur gemäß Figur 1 mit erstem und zweitem Bauteil aneinander festgelegt gemäß einer Ausführungsform der vorliegenden Erfindung in dreidimensionaler Darstellung.

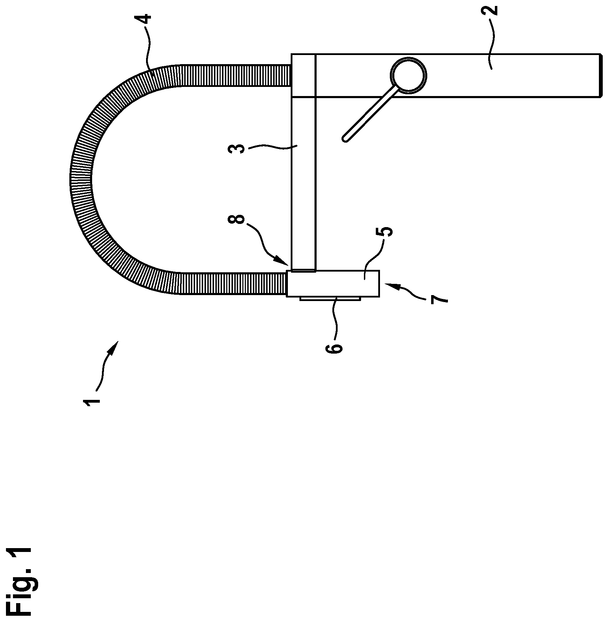

Figur 1 zeigt eine Armatur gemäß einer Ausführungsform der vorliegenden Erfindung.

In Figur 1 ist eine Sanitärarmatur 1 gezeigt. Die Sanitärarmatur 1 umfasst einen Grundkörper 2 oder Sockel, eine Schlauchbrause 4 und einen an dem Grundkörper 2 horizontal gehaltenen Haltearm 3, wobei an dem Haltearm 3 die Schlauchbrause 4 mit ihrem Brausekopf 5 mit Auslass 7 in einer Ruheposition mittels einer lösbaren Verbindung 8 lösbar gehalten ist. Auf der dem Haltearm 3 abgewandten Seite des Brausekopfs 5 ist ein Taster 6 zur Auslösung des Wasserflusses aus dem Auslass 7 des Brausekopfs 5 angeordnet.

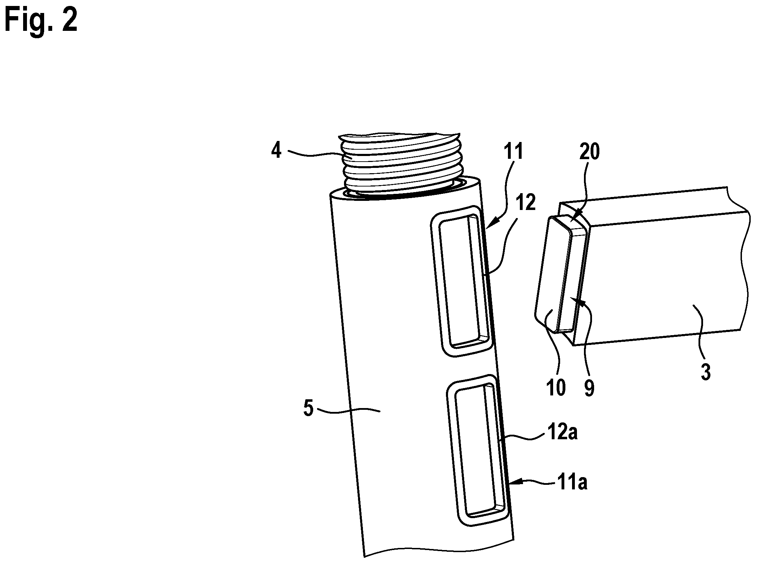

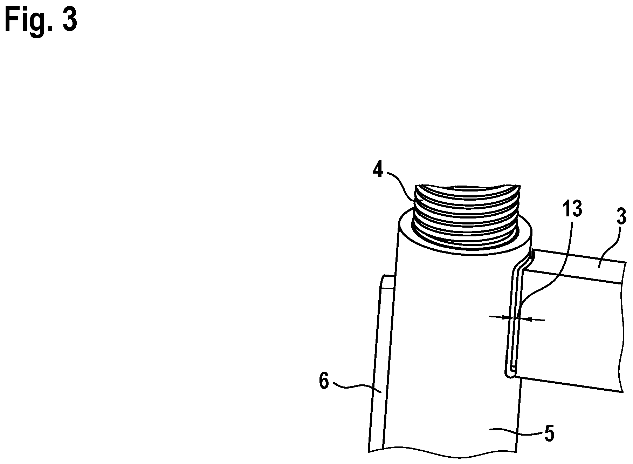

Figur 2 zeigt die Armatur gemäß Figur 1 mit erstem und zweitem Bauteil gelöst voneinander gemäß einer Ausführungsform der vorliegenden Erfindung in dreidimensionaler Darstellung und Figur 3 zeigt die Armatur gemäß Figur 1 mit erstem und zweitem Bauteil aneinander festgelegt gemäß einer Ausführungsform der vorliegenden Erfindung in dreidimensionaler Darstellung.

In den Figuren 2 und 3 weist der Haltearm 3 einen rechteckförmigen Querschnitt auf. An seinem dem Grundkörper 2 (nicht gezeigt) abgewandten Ende weist der Haltearm 3 einen Vorsprung 20 in Form eines quaderförmigen Magneten 9 auf, der mit einer entsprechend ausgebildeten Schutzkappe 10 versehen ist.

Der Brausekopf 5 weist eine hierzu korrespondierende erste Vertiefung 11 und eine hierzu korrespondierende zweite Vertiefung 11a auf, die jeweils mit einer Schutzeinlage 12, 12a versehen sind. Schutzkappe 10 und Schutzeinlage 12, 12a können dabei aus Kunststoff hergestellt sein und sind dabei so ausgebildet, dass die Schutzkappe 10 in die Schutzeinlade 12, 12a formschlüssig einbringbar ist. Darüber hinaus ist der Brausekopf 5 aus magnetischem Material hergestellt oder weist zumindest teilweise magnetisches Material, insbesondere im Bereich der Vertiefungen 11, 11a, auf, sodass bei Einbringen des Magneten 9 in die jeweilige Vertiefung 11, 11a eine kraftschlüssige, lösbare Verbindung basierend auf Magnetkraft herstellbar ist. In der Position, in der der Brausekopf 5 an dem Haltearm 3 festgelegt ist, sind Brausekopf 5 und Haltearm 3 bis auf die Festlegung über den in die Vertiefung 11, 11a eingreifenden Vorsprung 20 voneinander beabstandet. Insbesondere ist auf der radialen Außenseite des Vorsprungs 20 ein umlaufender Abstand 13 gebildet, der Brausekopf 5 und Haltearm 3 voneinander beabstandet. Der Abstand 13 kann hierbei zwischen 1 mm und 5 mm betragen.

Möchte ein Nutzer den Brausekopf 5 in einer höheren Position anordnen, kann dieser die zweite Vertiefung 11a zum Eingriff des Vorsprungs 20 nutzen, die vertikal unterhalb der ersten Vertiefung 11 angeordnet ist. Es ist jedoch auch denkbar, die erste und zweite Vertiefung 11, 11a in Umfangsrichtung des zylinderförmigen Brausekopfs 5 versetzt zueinander anzuordnen.

Zusammenfassend kann zumindest eine der Ausführungsformen der Erfindung zumindest eines der folgenden Merkmale und/oder zumindest einen der folgenden Vorteile verwirklichen:
- Haltearm der Armatur mit integriertem Magnet.
- Magnet wird durch eine Kunststoffkappe geschützt.
- Brause mit magnetischem Gegenstück und entsprechend ausgeprägter Vertiefung zur Aufnahme des Magneten aus dem Arm. Diese wird ebenfalls durch einen Einsatz aus Kunststoff geschützt.
- Verminderung von Beschädigungen der Oberflächen von Brause und Haltearm.
- Geräuschminderung durch Schutzelemente, insbesondere aus Kunststoff.
- Hohe optische Anmutung.
- Zuverlässige und definierte Festlegung.
- Einfache definierte Betätigung der Armatur.
- Einfache und kostengünstige Herstellung.

### Bezugszeichenliste

- 1: Sanitärarmatur
- 2: Grundkörper
- 3: Haltearm
- 4: Schlauchbrause
- 5: Brausekopf
- 6: Taster
- 7: Auslass
- 8: Lösbare Verbindung
- 9: Magnet
- 10: Schutzkappe
- 11, 11a: Vertiefung
- 12, 12a: Schutzeinlage
- 13: Abstand

- 20: Vorsprung

## Patentansprüche

1. Armatur (1), insbesondere eine Sanitärarmatur, umfassend
einen Grundkörper (2),
ein erstes Bauteil in Form eines an dem Grundkörper angeordneten Arms (3),
ein zweites Bauteil in Form eines an dem Grundkörper (2) angeordneten flexiblen Auslasses (5), wobei
das zweite Bauteil (5) lösbar an dem ersten Bauteil (3) festlegbar ist,
wobei mittels eines Vorsprungs (20) an einem der beiden Bauteile (3, 5), der in zumindest eine Vertiefung (11, 11a) in dem anderen der beiden Bauteile (3, 5) eingreift, die beiden Bauteile (3, 5) aneinander mittels einer lösbaren Verbindung (8) verdreh- und verschiebesicher festlegbar sind, wobei
die Vertiefung (11, 11a) eine vollständig umlaufende Begrenzung aufweist.

2. Armatur (1) gemäß Anspruch 1, **dadurch gekennzeichnet, dass** die lösbare Verbindung (8) mittels einer kraftschlüssigen Verbindung, insbesondere mittels Magnetkraft, bereitstellbar ist.

3. Armatur (1) gemäß Anspruch 2, **dadurch gekennzeichnet, dass** eines der Bauteile (3, 5) magnetisch ausgebildet ist, insbesondere das zweite Bauteil (5), und dass das andere Bauteil (3, 5), insbesondere das erste Bauteil (3), zumindest einen Magneten (9) aufweist.

4. Armatur (1) gemäß Anspruch 3, **dadurch gekennzeichnet, dass** der Vorsprung (20) als Magnet ausgebildet ist.

5. Armatur (1) gemäß einem der Ansprüche 1-4, **dadurch gekennzeichnet, dass** der Vorsprung (20) und/oder die Vertiefung (11, 11a) mit einer Schutzkappe (10, 12, 12a), insbesondere aus Kunststoff, versehen ist.

6. Armatur (1) gemäß einem der Ansprüche 1-5, **dadurch gekennzeichnet, dass** der Querschnitt von Vorsprung (20) und/oder Vertiefung (11, 11a) zumindest eine Ecke aufweist, insbesondere zumindest drei Ecken, insbesondere vier Ecken und insbesondere quadratisch oder rechteckförmig ausgebildet ist.

7. Armatur (1) gemäß einem der Ansprüche 1-6, **dadurch gekennzeichnet, dass** die beiden Bauteile (3, 5) zumindest teilweise durch einen umlaufenden Abstand (13) aneinander festlegbar sind.

8. Armatur (1) gemäß Anspruch 7, **dadurch gekennzeichnet, dass** in Einführrichtung der Vorsprung (20) eine größere Tiefe aufweist als die Vertiefung (11, 11a) zur Bildung des Abstands (13).

9. Armatur (1) gemäß Anspruch 7 oder 8, **dadurch gekennzeichnet, dass** der Abstand (13) eine Größe von 0,5 mm oder mehr, vorzugsweise 1 mm oder mehr, insbesondere 2 mm oder mehr, und 10 mm oder weniger, vorzugsweise 5 mm oder weniger, insbesondere 3 mm oder weniger, aufweist.

10. Armatur (1) gemäß einem der Ansprüche 1-9, **dadurch gekennzeichnet, dass** mehrere Vertiefungen (11, 11a) angeordnet sind.

11. Armatur (1) gemäß Anspruch 10, **dadurch gekennzeichnet, dass** die Vertiefungen (11, 11a) in vertikaler Richtung voneinander beabstandet angeordnet sind, insbesondere auf einer gemeinsamen Achse liegend.

12. Armatur (1) gemäß einem der Ansprüche 1-11, **dadurch gekennzeichnet, dass** die zumindest eine Vertiefung (11, 11a) entlang einer Richtung größer als der Vorsprung (20) ausgebildet ist, derart, dass der Vorsprung (20) innerhalb der Vertiefung (11, 11a) frei anordenbar ist.

13. Armatur (1) gemäß einem der Ansprüche 1-12, **dadurch gekennzeichnet, dass** der flexible Auslass (7) in Form einer Schlauchbrause (4) ausgebildet ist.

14. Armatur (1) gemäß einem der Ansprüche 1-13, **dadurch gekennzeichnet, dass** das zweite Bauteil (5) eine Betätigungseinrichtung (6) zur Betätigung der Sanitärarmatur (1) aufweist, die insbesondere auf der dem ersten Bauteil (3) abgewandten Seite des zweiten Bauteils (5) angeordnet ist.

## Claims

1. Fitting (1), in particular a sanitary fitting, comprising a base member (2),
a first component in the form of an arm (3) which is arranged on the base member,
a second component in the form of a flexible outlet (5) which is arranged on the base member (2), wherein
the second component (5) can be releasably secured to the first component (3),
wherein, by means of a projection (20) on one of the two components (3, 5) which engages in at least one recess (11, 11a) in the other of the two components (3, 5), the two components (3, 5) can be secured to each other in a torsion-resistant and displacement-resistant manner by means of a releasable connection (8), wherein
the recess (11, 11a) has a completely circumferential delimitation.

2. Fitting (1) according to claim 1, **characterised in that** the releasable connection (8) can be provided by means of a non-positive-locking connection, in particular by means of magnetic force.

3. Fitting (1) according to claim 2, **characterised in that** one of the components (3, 5) is constructed magnetically, in particular the second component (5), and **in that** the other component (3, 5), in particular the first component (3), has at least one magnet (9).

4. Fitting (1) according to claim 3, **characterised in that** the projection (20) is in the form of a magnet.

5. Fitting (1) according to any one of claims 1 to 4, **characterised in that** the projection (20) and/or the recess (11, 11a) is provided with a protective cap (10, 12, 12a), in particular made of plastics material.

6. Fitting (1) according to any one of claims 1 to 5, **characterised in that** the cross-section of the projection (20) and/or recess (11, 11a) has at least one corner, in particular at least three corners, in particular four corners and is constructed in particular in a square or rectangular manner.

7. Fitting (1) according to any one of claims 1 to 6, **characterised in that** the two components (3, 5) can be secured to each other at least partially with a circumferential spacing (13).

8. Fitting (1) according to claim 7, **characterised in that** in the introduction direction the projection (20) has a greater depth than the recess (11, 11a) in order to form the spacing (13).

9. Fitting (1) according to claim 7 or 8, **characterised in that** the spacing (13) has a size of 0.5 mm or more, preferably 1 mm or more, in particular 2 mm or more, and 10 mm or less, preferably 5 mm or less, in particular 3 mm or less.

10. Fitting (1) according to any one of claims 1 to 9, **characterised in that** a plurality of recesses (11, 11a) are arranged.

11. Fitting (1) according to claim 10, **characterised in that** the recesses (11, 11a) are arranged spaced apart from each other in the vertical direction, in particular located in a common axis.

12. Fitting (1) according to any one of claims 1 to 11, **characterised in that** the at least one recess (11, 11a) is constructed to be larger than the projection (20) in one direction in such a manner that the projection (20) can be freely arranged within the recess (11, 11a).

13. Fitting (1) according to any one of claims 1 to 12, **characterised in that** the flexible outlet (7) is in the form of a hose spray (4).

14. Fitting (1) according to any one of claims 1 to 13, **characterised in that** the second component (5) has an activation device (6) for activating the sanitary fitting (1) which is arranged in particular at the side of the second component (5) facing away from the first component (3).

## Revendications

1. Robinet (1), en particulier robinet sanitaire, comprenant un corps de base (2),
un premier composant sous la forme d'un bras (3) disposé sur le corps de base,
un second composant sous la forme d'une sortie flexible (5) disposée sur le corps de base (2),
le second composant (5) pouvant être fixé de manière amovible sur le premier composant (3),
les deux composants (3, 5) pouvant être fixés l'un sur l'autre au moyen d'une liaison amovible (8) de manière à empêcher toute rotation et tout coulissement au moyen d'une partie faisant saillie (20) sur l'un des deux composants (3, 5), qui vient en prise avec au moins un renfoncement (11, 11a) dans l'autre des deux composants (3, 5),
le renfoncement (11, 11a) comportant une limite entièrement périphérique.

2. Robinet (1) selon la revendication 1, **caractérisé en ce que** la liaison amovible (8) peut être fournie au moyen d'une liaison à force, en particulier au moyen d'une force magnétique.

3. Robinet (1) selon la revendication 2, **caractérisé en ce que** l'un des composants (3, 5) est formé magnétiquement, en particulier le second composant (5), et que l'autre composant (3, 5), en particulier le premier composant (3), comporte au moins un aimant (9).

4. Robinet (1) selon la revendication 3, **caractérisé en ce que** la partie faisant saillie (20) est formée comme un aimant.

5. Robinet (1) selon l'une des revendications 1 à 4, **caractérisé en ce que** la partie faisant saillie (20) et/ou le renfoncement (11, 11a) sont pourvus d'un capuchon de protection (10, 12, 12a), en particulier en matière plastique.

6. Robinet (1) selon l'une des revendications 1 à 5, **caractérisé en ce que** la section transversale de la partie faisant saillie (20) et/ou du renfoncement (11, 11a) comporte au moins un coin, en particulier au moins trois coins, en particulier quatre coins, et est formée en particulier avec une forme carrée ou rectangulaire.

7. Robinet (1) selon l'une des revendications 1 à 6, **caractérisé en ce que** les deux composants (3, 5) peuvent être fixés au moins en partie l'un sur l'autre par une distance périphérique (13).

8. Robinet (1) selon la revendication 7, **caractérisé en ce que** la partie faisant saillie (20) présente, dans la direction d'introduction, une profondeur plus grande que le renfoncement (11, 11a) pour former la distance (13).

9. Robinet (1) selon la revendication 7 ou 8, **caractérisé en ce que** la distance (13) présente une taille de 0,5 mm ou plus, de préférence de 1 mm ou plus, en particulier de 2 mm ou plus, et de 10 mm ou moins, de préférence de 5 mm ou moins, en particulier de 3 mm ou moins.

10. Robinet (1) selon l'une des revendications 1 à 9, **caractérisé en ce que** plusieurs renfoncements (11, 11a) sont disposés.

11. Robinet (1) selon la revendication 10, **caractérisé en ce que** les renfoncements (11, 11a) sont disposés de manière espacée les uns des autres dans la direction verticale, tout en se trouvant en particulier sur un axe commun.

12. Robinet (1) selon l'une des revendications 1 à 11, **caractérisé en ce que** l'au moins un renfoncement (11, 11a) est formé le long d'une direction de manière plus grande que la partie faisant saillie (20), de telle manière que la partie faisant saillie (20) peut être disposée librement à l'intérieur du renfoncement (11, 11a).

13. Robinet (1) selon l'une des revendications 1 à 12, **caractérisé en ce que** la sortie flexible (7) est formée sous la forme d'une douchette à flexible (4).

14. Robinet (1) selon l'une des revendications 1 à 13, **caractérisé en ce que** le second composant (5) comporte un dispositif d'actionnement (6) destiné à actionner le robinet sanitaire (1), qui est disposé en particulier sur le côté du second composant (5) opposé au premier composant (3).
